(19) Europäisches Patentamt
European Patent Office
Office européen des brevets

(11) **EP 4 040 376 B1**

(12) **EUROPEAN PATENT SPECIFICATION**

(45) Date of publication and mention
of the grant of the patent:
**08.11.2023 Bulletin 2023/45**

(21) Application number: **20902823.2**

(22) Date of filing: **11.12.2020**

(51) International Patent Classification (IPC):
*G06T 3/40* (2006.01)   *G06T 11/60* (2006.01)
*G06F 16/54* (2019.01)

(52) Cooperative Patent Classification (CPC):
**G06T 11/60; G06F 16/54**

(86) International application number:
**PCT/CN2020/135761**

(87) International publication number:
**WO 2021/121162 (24.06.2021 Gazette 2021/25)**

(54) **PICTURE PROCESSING METHOD AND APPARATUS, AND ELECTRONIC DEVICE AND STORAGE MEDIUM**

BILDVERARBEITUNGSVERFAHREN UND -VORRICHTUNG SOWIE ELEKTRONISCHE
VORRICHTUNG UND SPEICHERMEDIUM

PROCÉDÉ ET APPAREIL DE TRAITEMENT D'IMAGE, AINSI QUE DISPOSITIF ÉLECTRONIQUE
ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2019 CN 201911304930**

(43) Date of publication of application:
**10.08.2022 Bulletin 2022/32**

(73) Proprietor: **Honor Device Co., Ltd.
Shenzhen, Guangdong 518040 (CN)**

(72) Inventors:
• **ZHANG, Yundie**
  **Shenzhen, Guangdong 518129 (CN)**
• **HU, Liang**
  **Shenzhen, Guangdong 518129 (CN)**

(74) Representative: **Roth, Sebastian
Mitscherlich PartmbB
Patent- und Rechtsanwälte
Karlstraße 7
80333 München (DE)**

(56) References cited:
| | |
|---|---|
| EP-A2- 2 555 165 | CN-A- 107 330 858 |
| CN-A- 107 705 251 | CN-A- 107 798 655 |
| CN-A- 109 064 526 | CN-A- 111 008 933 |
| US-A1- 2010 199 227 | US-A1- 2010 329 588 |
| US-A1- 2016 267 634 | |

**Description**

**TECHNICAL FIELD**

This application relates to the computer field, and in particular, to a picture processing method and apparatus, and a storage medium

**BACKGROUND**

With popularization of mobile phones, users have increasingly high requirements for beautifying photos in the mobile phones. Nowadays, various functions such as a picture stitching function that satisfy user requirements are increasingly provided in a variety of application software. A user can stitch a plurality of photos together as one picture for presentation. In a picture stitching process, the user needs to manually select a proper collage template based on a quantity of pictures, and sequentially fill pictures in grids of the collage template according to a sequence in which the user selects the pictures, to complete picture stitching. In this process, after manually selecting the collage template, the pictures selected by the user aresequentially places, according to the sequence in which the user selects the pictures, in the grids of the collage template correspondingly. If there is a relatively large difference between a size of a grid of the collage template and a size of a correspondingly placed picture, the picture is over-cropped.

EP 2 555 165 A2 relates to a method and a device for packing multiple images.

US 2010/329588 A1 relates to an autocropping and autolayout method for digital images.

US 2010/199227 A1 relates to image collage authoring.

**SUMMARY**

Embodiments of this application provide a picture processing method and apparatus, and a storage medium, so that a user does not need to manually select a collage template, and a problem that a picture is over-cropped is avoided. The invention is set out in the appended set of claims.

According to a first aspect, an embodiment of this application provides a picture processing method according to claim 1.

According to the picture processing method disclosed in this embodiment of this application, after selecting the predetermined quantity of pictures, correspondingly selecting, based on the predetermined quantity of pictures, the templates whose quantities of picture grids for accommodating pictures are the same as the predetermined quantity, where the templates form the first template set. After the first template set is selected, a specific template that is selected as the target template may be determined based on the total cropping amount of each template obtained after the pictures are correspondingly placed in the picture grids of each template. Specifically, the pictures are sorted according to the predetermined sequence of the size ratios for describing the sizes of the pictures; the picture grids of each template are sorted according to the same predetermined sequence based on the size ratios for describing the sizes of the picture grids; the pictures are placed, according to the same predetermined sequence, in the picture grids corresponding to each template; a total cropping amount of the pictures placed in the picture grids of the template is calculated, where each template is corresponding to one total cropping amount; and the template corresponding to the minimum cropping amount is used as the target template. In this way, during picture stitching performed on the pictures, the template corresponding to the minimum cropping amount is selected as a collage template, and picture grids in which the pictures are placed are correspondingly sorted based on the size ratios of the pictures. This avoids a great loss of information of the pictures caused because the pictures are over-cropped.

In a possible implementation of the first aspect, the sorting the predetermined quantity of pictures includes: sorting the pictures according to a predetermined sequence of horizontal-to-vertical ratios of the pictures. Specifically, a size ratio for describing a size of a picture may include a vertical-to-horizontal ratio of the picture or a horizontal-to-vertical ratio of the picture, where the vertical-to-horizontal ratio of the picture is a ratio of a height of the picture to a width of the picture, and the horizontal-to-vertical ratio of the picture is a ratio of the width of the picture to the height of the picture. Further, the size ratio of the picture may alternatively be a ratio of the width of the picture to a length of a diagonal of the picture or a ratio of the height of the picture to the length of the diagonal of the picture.

In a possible implementation of the first aspect, the picture grids may be rectangular or non-rectangular. When the picture grids are rectangular, the sorting the predetermined quantity of picture grids includes: sorting the picture grids according to a predetermined sequence of horizontal-to-vertical ratios of the picture grids. Specifically, a size ratio for describing a size of a picture grid may include a vertical-to-horizontal ratio of the picture grid or a horizontal-to-vertical ratio of the picture grid, where the vertical-to-horizontal ratio of the picture grid is a ratio of a height of the picture grid to a width of the picture grid, and the horizontal-to-vertical ratio of the picture grid is a ratio of the width of the picture grid to the height of the picture grid. Further, the size ratio of the picture grid may alternatively be a ratio of the width of the picture grid to a length of a diagonal of the picture grid or a ratio of the height of the picture grid to the length of the diagonal of the picture grid. It should be noted that the size ratios of the pictures should be consistent with the size ratios of the picture grids during sorting. If the size ratios of the pictures are horizontal-to-vertical ratios, the size ratios of the picture grids should also be horizontal-to-vertical ratios during sorting, to ensure accuracy of matching between the pictures and the corresponding picture grids.

In a possible implementation of the first aspect, when the picture grids are non-rectangular, the picture grids may be elliptical, circular, pentagonal, or the like. For the non-rectangular picture grids, the picture grids may be sorted according to a predetermined sequence of horizontal-to-vertical ratios of circumscribed rectangles of the picture grids. For an elliptical picture grid, a horizontal-to-vertical ratio of a circumscribed rectangle of the elliptical picture grid is a ratio of a minor axis of an ellipse to a major axis of the ellipse. For a circular picture grid, a horizontal-to-vertical ratio of a circumscribed rectangle of the circular picture grid is a ratio between diameters of a circle. A circumscribed rectangle of a non-rectangular picture grid refers to a boundary determined based on a maximum horizontal coordinate, a minimum horizontal coordinate, a maximum vertical coordinate, and a minimum vertical coordinate of the non-rectangular picture grid in two-dimensional coordinates of the non-rectangular picture grid in a two-dimensional shape.

In a possible implementation of the first aspect, performing sorting according to a predetermined sequence of horizontal-to-vertical ratios of the predetermined quantity of pictures and horizontal-to-vertical ratios of the picture grids of each template may be performing sorting in descending order of values of the horizontal-to-vertical ratios of the predetermined quantity of pictures, or may be performing sorting in ascending order of values of the horizontal-to-vertical ratios of the predetermined quantity of pictures.

In a possible implementation of the first aspect, the horizontal-to-vertical ratio of the picture includes a ratio of a width of the picture to a height of the picture, and the horizontal-to-vertical ratio of the picture grid includes a ratio of a width of the picture grid to a height of the picture grid, and the width and the height are in units of centimeters.

In a possible implementation of the first aspect, all the selected pictures may include target pictures whose size ratios for describing sizes of the pictures are the same. For these target pictures, there is only one picture grid corresponding to predetermined sequence numbers of the target pictures. To improve user experience, time points at which the target pictures are selected in a selection sequence in the step of selecting a predetermined quantity of pictures by the user may be used as priorities to preferably allocate a picture grid to a target picture that is selected earlier. The selection sequence is a sequence in which the user sequentially selects the pictures. Picture grids may be sequentially allocated for the remaining target pictures subsequently according to the predetermined sequence of the picture grids. This ensures that a minimum cropping amount is obtained after the predetermined quantity of pictures are placed in the picture grids.

In a possible implementation of the first aspect, if there may be a plurality of target templates corresponding to the minimum cropping amount, a second template set is formed by using the target templates, and a target template with a highest priority is selected, according to preset priorities, from the second template set as a final target template of the predetermined quantity of pictures. The preset priorities may be user-defined. To be specific, the user defines a selected target template as a target template with a relatively high priority according to a use requirement of the user. This improves user experience. Alternatively, a basic target template that can be used in an offline state may be set as a template with a higher priority, and a template that can be used only after being downloaded online may be set as a template with a priority lower than that of the basic target template.

In a possible implementation of the first aspect, to avoid a decrease in a speed of calculating a cropping amount caused due to an excessively large volume of area difference data in a manner in which the cropping amount is calculated by using an area difference between each picture grid of one template and a picture corresponding to the picture grid, the cropping amount corresponding to the template may be calculated in a normalization processing manner. To be specific, cropping amounts of pictures correspondingly placed in picture grids are represented in a percentage form, and values of the cropping amounts of the pictures correspondingly placed in the picture grids are all normalized to a range (0, 1). The cropping amount corresponding to the template is calculated according to the following formulas:

$$C_k = \sum_{i=1}^{n} C_{ki}$$

$$C_{ki} = \begin{cases} 1 - \dfrac{r_i}{r_{ki}} & (r_{ki} > r_i) \\ 1 - \dfrac{r_i}{r_{ki}} & (r_i > r_{ki}) \end{cases}$$

where $C_k$ is a total cropping amount corresponding to a $k^{th}$ template, $C_{ki}$, is a cropping amount of an $i^{th}$ picture placed in an $i^{th}$ picture grid of the $k^{th}$ template, $r_i$ is a size ratio for describing a size of the $i^{th}$ picture, and $r_{ki}$ is a size ratio for describing the $i^{th}$ picture grid that is of the $k^{th}$ template and in which the $i^{th}$ picture is placed.

In a possible implementation of the first aspect, after the target template is determined, the pictures are correspondingly placed, according to the predetermined sequence, in picture grids whose predetermined sequence numbers are the same as those of the pictures, to complete picture stitching processing on the pictures. Three pictures are used as an example. A horizontal-to-vertical ratio of a first picture is 3/4, a horizontal-to-vertical ratio of a second picture is 1/2, and a horizontal-to-vertical ratio of a third picture is 1/3. The three pictures are sorted in descending order of the horizontal-to-vertical ratios: the first picture, the second picture, and the third picture. A quantity of picture grids of a selected target template is correspondingly 3. A horizontal-to-vertical ratio of a first picture grid is 5/12, a horizontal-to-vertical ratio of a second picture grid is 5/6, and a horizontal-to-vertical ratio of a third picture grid is 7/12. The three picture grids of the target template are sorted in descending order of the horizontal-to-vertical ratios: the second picture grid, the third picture grid, and the first picture grid. According to a predetermined sorting sequence, the first picture whose sequence number is 1 is placed in the second picture grid whose sequence number is 1, the second picture whose sequence number is 2 is placed in the third picture grid whose sequence number is 2, and the third picture whose sequence number is 3 is placed in the third picture grid whose sequence number is 3. In this way, that a total cropping amount of the three pictures is minimum is ensured to the utmost.

In a possible implementation of the first aspect, according to the cropping amount calculation formulas, a total cropping amount of the three pictures used as an example is $\left(1-\frac{9}{10}\right)+\left(1-\frac{6}{7}\right)+\left(1-\frac{4}{5}\right)$ , that is, the total cropping amount of the three pictures is 44.3%. It should be noted that if a size ratio of a picture is the same as that of a picture grid, it indicates that the picture overlaps the picture grid or that the picture may be proportionally zoomed in or out to make the picture overlap the picture grid. In this case, the picture whose size ratio is the same as that of the picture grid can be placed in the picture grid without being cropped. In other words, a cropping amount is zero.

According to a second aspect, an embodiment of this application discloses a picture processing apparatus according to claim 11.

In a possible implementation of the second aspect, the first sorting module includes:

a first sorting unit, configured to sort the pictures according to a predetermined sequence of horizontal-to-vertical ratios of the pictures.

In a possible implementation of the second aspect, the second sorting module includes:

a second sorting unit, configured to sort the picture grids according to a predetermined sequence of horizontal-to-vertical ratios of the picture grids.

In a possible implementation of the second aspect, the second sorting module includes:

a third sorting unit, configured to sort the picture grids according to a predetermined sequence of horizontal-to-vertical ratios of circumscribed rectangles of the picture grids.

An embodiment of this application discloses an electronic device. The electronic device includes:

a memory, configured to store a processing program; and

a processor, where when executing the processing program, the processor implements the steps of the image processing method according to any one of the first aspect or the possible implementations of the first aspect.

According to a third aspect, an embodiment of this application discloses a computer-readable storage medium. The computer-readable storage medium stores a processing program. When executing the processing program, a processor implements the steps of the image processing method according to any one of the first aspect or the possible implementations of the first aspect.

Other features and corresponding beneficial effects of this application are described in the following of this specification. In addition, it should be understood that at least some of the beneficial effects are obvious in the descriptions in this specification of this application.

## BRIEF DESCRIPTION OF DRAWINGS

FIG. 1(a) to FIG. 1(c) are schematic diagrams of picture collages in the prior art according to an embodiment of this application;

FIG. 2 is a schematic flowchart of a picture processing method according to an embodiment of this application;

FIG. 3(a) is a schematic diagram of a layout of a collage template according to an embodiment of this application;

FIG. 3(b) is a schematic diagram of an aesthetic spiral layout according to an embodiment of this application;

FIG. 4(a) is a schematic flowchart of a method for allocating a picture grid for a target picture according to an embodiment of this application;

FIG. 4(b) is a schematic flowchart of a method for sorting picture grids according to an embodiment of this application;

FIG. 4(c) is a schematic graphical diagram of a circumscribed rectangle of a picture grid according to an embodiment of this application;

FIG. 4(d) is a schematic flowchart of a method for calculating a cropping amount corresponding to a template according to an embodiment of this application;

FIG. 4(e) is a schematic flowchart of a method for selecting an optimal target template according to an embodiment of this application;

FIG. 5(a) is a schematic diagram of placing, in a picture grid of a target template, a picture whose predetermined sequence number is the same as that of the picture grid according to an embodiment of this application;

FIG. 5(b) is a schematic diagram of position adjustment performed when a picture is placed in a picture grid according to an embodiment of this application;
FIG. 5(c) to FIG. 5(e) are schematic diagrams of performing picture stitching by using a picture processing method according to an embodiment of this application;
FIG. 6 is a schematic structural diagram of a picture processing apparatus according to an embodiment of this application;
FIG. 7 is a schematic structural diagram of an electronic device according to an embodiment of this application; and
FIG. 8 is a schematic structural diagram of an SOC according to an embodiment of this application.

## DESCRIPTION OF EMBODIMENTS

The following describes implementations of this application by using specific embodiments, and persons skilled in the art can easily understand other advantages and effects of this application according to content disclosed in this specification. Although this application is described with reference to example embodiments, this does not mean that features of the present invention are limited to the implementations. On the contrary, an objective of describing the present invention with reference to the implementations is to cover other choices or modifications that may be derived based on the claims of this application. For ease of in-depth understanding of this application, the following descriptions include many specific details. This application may alternatively be implemented without these details. In addition, to avoid confusing or obscuring the focus of this application, some specific details are omitted in the descriptions. It should be noted that the embodiments in this application and features in the embodiments may be mutually combined in the case of no conflict.

It should be noted that, in this specification, similar numerals and letters indicate similar items in the following accompanying drawings. Therefore, once an item is defined in one accompanying drawing, it is unnecessary to further define and interpret the item in the subsequent accompanying drawings.

The following clearly and completely describes the technical solutions in the embodiments of this application with reference to the accompanying drawings. It is clearly that the described embodiments are some but not all of the embodiments of this application. All other embodiments obtained by persons of ordinary skill in the art based on the embodiments of this application without creative efforts shall fall within the protection scope of this application. In addition, technologies known to persons skilled in the art may also be used as a part of the embodiments of this application. Details are not described in this application.

It can be understood that, a term "module" used in this application may refer to or include an application-specific integrated circuit (ASIC), an electronic circuit, a processor (a shared processor, a dedicated processor, or a group processor) that executes one or more software or firmware programs, and/or a memory, a combined logic circuit, and/or another suitable hardware component that provides a described function, or may include a part of these hardware components.

It can be understood that, in the embodiments of this application, a processor may be a microprocessor, a digital signal processor, a microcontroller, or the like, and/or any combination thereof. Alternatively, the processor may be a single-core processor, a multi-core processor, or the like, and/or any combination thereof. With popularization of mobile phones, users have increasingly high requirements for post-processing photos in the mobile phones. Nowadays, various functions such as a picture stitching function that satisfy user requirements are increasingly provided in a variety of application software. A user can stitch together a plurality of photos that are taken by a mobile phone and that are stored in a gallery in the mobile phone as one picture for presentation. In a picture stitching process, the user needs to manually select a proper collage template based on a quantity of pictures (that is, in correspondence to the quantity of pictures, select a collage template whose quantity of picture grids is the same as the quantity of pictures), and sequentially fill pictures in grids (picture grids) of the collage template according to a sequence in which the user selects the pictures, to complete picture stitching. In this process, after manually selecting the collage template, the user sequentially places, correspondingly according to the sequence in which the user selects the pictures, the pictures selected by the user in the grids of the collage template. If there is a relatively large difference between a size of a grid of the collage template and a size of a correspondingly placed picture, the picture is over-cropped.

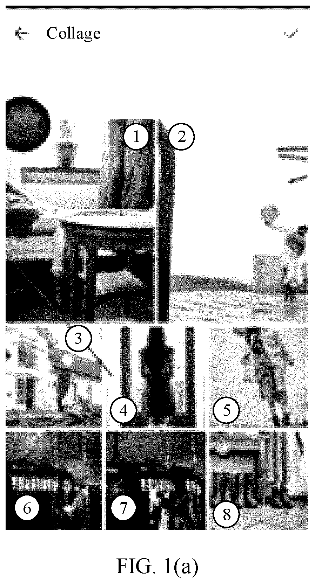

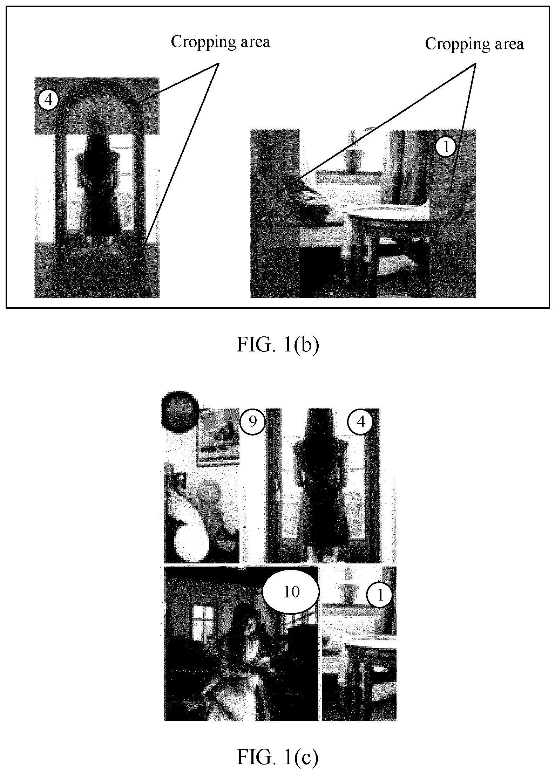

A picture stitching function provided by an application is used as an example. The picture stitching function is corresponding to a plurality of collage templates. The collage templates may be classified into a plurality of groups based on quantities of picture grids of the collage templates. Layout positions, in the entire template, of picture grids of a collage template in each group of collage templates are different and sizes of the picture grids are also different. Referring to FIG. 1(a) and FIG. 1(b), FIG. 1(a) is a schematic diagram of a collage according to an embodiment of this application. There are eight pictures in total in FIG. 1(a). After a user selects pictures, according to a prior-art solution, the eight example pictures are placed, according to a selection sequence in which the user selects the pictures, in example picture grids of an example template that has eight picture grids and that is selected by the user. During cropping, a part that is of an example picture and that is located in an example picture grid is retained, and parts of the example picture that are located outside the example picture grid are all cropped. As shown in FIG. 1(b), after the eight pictures are stitched, a picture numbered 1 and a picture numbered 4 are over-cropped, and cropping amounts of the two pictures are both exceed 40%. Consequently, important information of the example pictures is easily lost. If an example picture is a selfie face image including a face, and a face region is exactly located in an example picture grid, a big-face phenomenon is quite easily caused in this cropping manner, affecting user experience.

Next, referring to FIG. 1(c), FIG. 1(c) includes four pictures. An example template selected by the user is a template including four picture grids. When the four pictures are placed in the template, a picture numbered 1 and a picture numbered 4 are also over-cropped. Consequently, important information of the picture numbered 1 and the picture numbered 4 is lost. It can be understood that the picture numbered 1 and the picture numbered 4 in FIG. 1(c) are respectively the same as the picture numbered 1 and the picture numbered 4 in FIG. 1(b) and FIG. 1(a).

Based on this, embodiments of this application provide a picture processing method and apparatus, an electronic device, and a storage medium, so that a user does not need to manually select a collage template, and a problem that a picture is over-cropped is avoided.

With reference to the accompanying drawings, the following describes the picture processing method disclosed in the embodiments of this application.

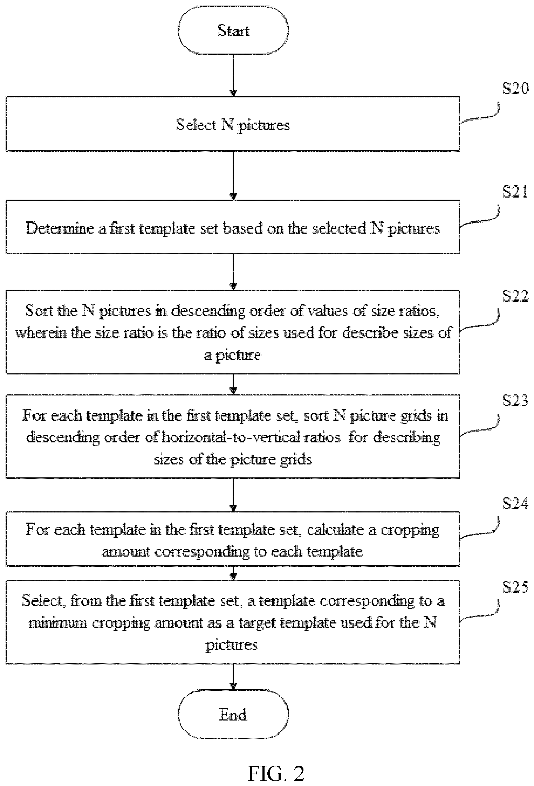

FIG. 2 is a schematic flowchart of a picture processing method according to an embodiment of this application. The picture processing method shown in FIG. 2 includes the following steps.

S20. Select N pictures to form a nine-patch grid collage style or a variant of a collage style based on a nine-patch grid.

In some embodiments of this application, N may be an integer. In this embodiment of this application, an example in which N is 8 is used for description, and the eight pictures are selected by a user from a plurality of pictures in a gallery in a mobile phone, and are to-be-stitched photos that are selected by the user. The quantity 8 of pictures is used as a predetermined quantity of pictures. The predetermined quantity may alternatively be another value. This is not limited in this embodiment of this application.

S21. Determine a first template set based on the selected N pictures. The first template set includes a plurality of templates. A quantity of picture grids of a template is also N. In this case, the quantity of pictures is the same as the quantity of picture grids. For example, there are eight templates, each of which is used for eight pictures. Each template includes eight picture grids for accommodating eight pictures.

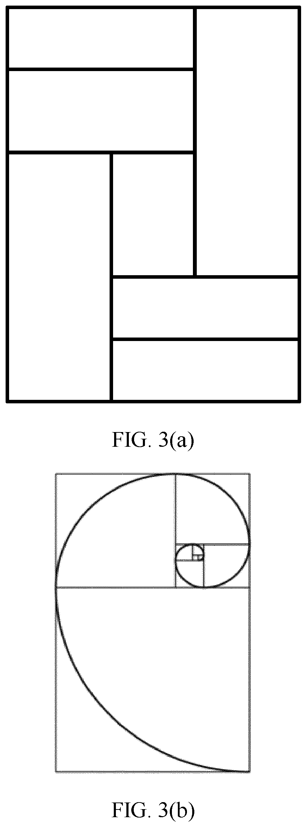

In some embodiments of this application, for a collage template used for pictures, to improve flexibility and aesthetics of the collage template and avoid over-cropping of the pictures, positions and sizes of picture grids of the collage template may be arranged based on a spiral layout principle of aesthetic layout. FIG. 3(a) is a schematic diagram of a layout of a collage template according to an embodiment of this application. In a counterclockwise direction, picture grids are arranged in a spiral and uneven distribution manner starting from a central picture grid. FIG. 3(b) is a schematic diagram of a spiral layout manner according to an embodiment of this application. In FIG. 3(a), the picture grids are arranged based on the spiral layout manner shown in FIG. 3(b), and are not arranged in an even distribution manner. Because sizes of selected to-be-stitched pictures are different from each other, if the picture grids are arranged in an even distribution manner, it is prone to over-crop the to-be-stitched pictures.

S22. Sort the N pictures in descending order of values of size ratios, wherein the size ratio is the ratio of sizes used for describe sizes of a picture.

In some embodiments of this application, a size ratio for describing a size of a picture may be a vertical-to-horizontal ratio (a ratio of a height to a width) of the picture, a horizontal-to-vertical ratio (a ratio of the width to the height) of the picture, a ratio of the width of the picture to a diagonal of the picture, a ratio of the height of the picture to the diagonal of the picture, or the like. There is a value relationship between the size ratios. The pictures may be sorted in descending order of the values of the size ratios or in ascending order of the values of size ratios. In other words, the eight pictures are sorted in a predetermined sequence that is the descending order or the ascending order. The width and the height of the picture may be in units of centimeters or pixels.

S23. For each template in the first template set, sort N picture grids in descending order of horizontal-to-vertical ratios for describing sizes of the picture grids.

In some embodiments of this application, the sorting the eight picture grids includes: sorting the picture grids in descending order of horizontal-to-vertical ratios of the picture grids. Specifically, a size ratio of sizes which is used to describe sizes of a picture grid may include a vertical-to-horizontal ratio of the picture grid or a horizontal-to-vertical ratio of the picture grid, where the vertical-to-horizontal ratio of the picture grid is a ratio of a height of the picture grid to a width of the picture grid, and the horizontal-to-vertical ratio of the picture grid is a ratio of the width of the picture grid to the height of the picture grid. Further, the size ratio of the picture grid may alternatively be a ratio of the width of the picture grid to a length of a diagonal of the picture grid or a ratio of the height of the picture grid to the length of the diagonal of the picture grid. It should be noted that the size ratios of the pictures should be consistent with size ratios of the picture grids during sorting. If the size ratios of the pictures are horizontal-to-vertical ratios, the size ratios of the picture grids should also be horizontal-to-vertical ratios during sorting, to ensure accuracy of matching between the pictures and the corresponding picture grids.

Further, in some embodiments of this application, the picture grids may be rectangular or non-rectangular. When the picture grids are non-rectangular, the picture grids may be elliptical, circular, pentagonal, or the like.

Further, in some embodiments of this application, the eight pictures selected by the user may include target pictures whose size ratios for describing sizes of the pictures are the same. For example, the eight pictures are sorted in descending order, and the eight picture grids of the template are sorted in descending order. The eight pictures include two target pictures whose size ratios are the same and whose sequence numbers are 5. There is only one picture grid whose sequence number is 5 in the eight picture grids and that is corresponding to the two target pictures whose sequence numbers are 5. To ensure that user experience is not degraded when the picture grid is allocated for the two target pictures, an embodiment of this application provides a method for allocating a picture grid for a target picture.

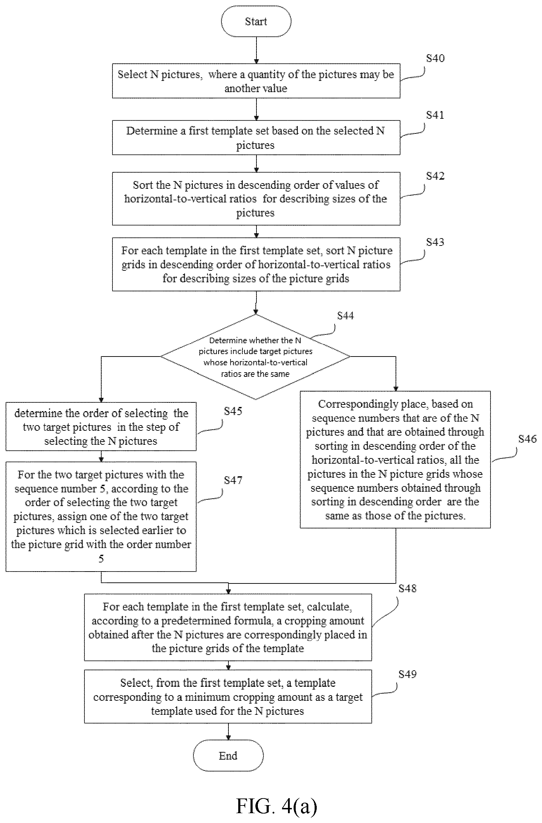

FIG. 4(a) is a schematic flowchart of a method for allocating a picture grid for a target picture according to an embodiment of this application. The method includes the following steps.

S40. Select N pictures to form a nine-patch grid collage style or a variant of a collage style based on a nine-patch grid.

N may be an integer. In this embodiment of this application, an example in which N is 8 is used for description.

S41. Determine a first template set based on the selected N pictures. The first template sets includes a plurality of templates. A quantity of picture grids of a template is also N. In this case, the quantity of pictures is the same as the quantity of picture grids. For example, there are eight templates used for eight pictures, each of which is used for eight pictures. Each template includes eight picture grids for accommodating eight pictures.

S42. Sort the N pictures in descending order of values of horizontal-to-vertical ratios, wherein the horizontal-to-vertical ratio is the ratio of the width to the height that is used for describing sizes of a picture

S43. For each template in the first template set, sort N picture grids in descending order based on shapes of the picture grids and horizontal-to-vertical ratios for describing sizes of the picture grids.

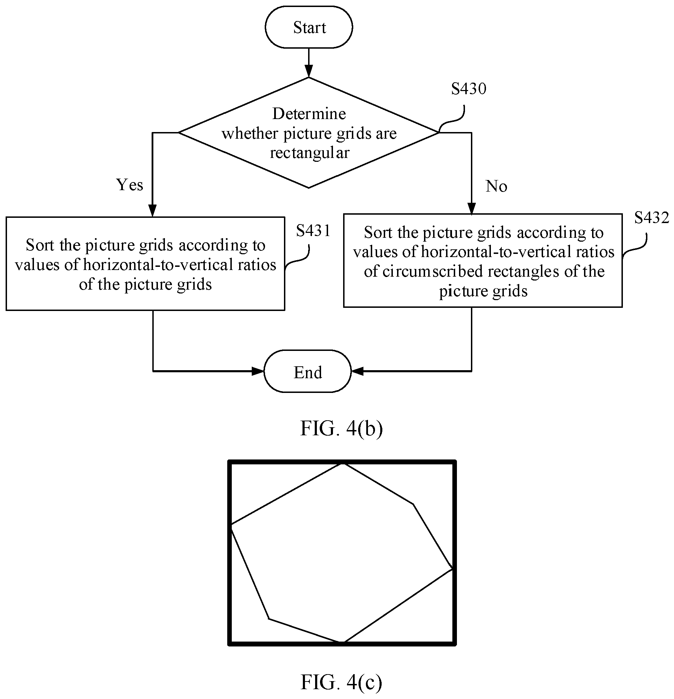

For S43, in some embodiments of this application, the picture grids may be rectangular or non-rectangular. When the picture grids are non-rectangular, the picture grids may be elliptical, circular, pentagonal, or the like. For rectangular picture grids and non-rectangular picture grids, size ratios for describing sizes of the picture grids may be sorted by using a method shown in FIG. 4(b). FIG. 4(b) is a schematic flowchart of a method for sorting picture grids according to an embodiment of this application. The method includes the following steps.

S430. Determine whether picture grids are rectangular; and if the picture grids are rectangular, proceed to S431; or if the picture grids are not rectangular, proceed to S432.

S431. Sort the picture grids according to values of horizontal-to-vertical ratios of the picture grids.

In some embodiments of this application, a size ratio for describing a size of a picture grid may include a vertical-to-horizontal ratio of the picture grid or a horizontal-to-vertical ratio of the picture grid, where the vertical-to-horizontal ratio of the picture grid is a ratio of a height of the picture grid to a width of the picture grid, and the horizontal-to-vertical ratio of the picture grid is a ratio of the width of the picture grid to the height of the picture grid. Further, the size ratio of the picture grid may alternatively be a ratio of the width of the picture grid to a length of a diagonal of the picture grid or a ratio of the height of the picture grid to the length of the diagonal of the picture grid. It should be noted that size ratios of pictures should be consistent with size ratios of the picture grids during sorting. If the size ratios of the pictures are horizontal-to-vertical ratios, the size ratios of the picture grids should also be horizontal-to-vertical ratios during sorting, to ensure accuracy of matching between the pictures and the corresponding picture grids.

S432. Sort the picture grids according to values of horizontal-to-vertical ratios of circumscribed rectangles of the picture grids.

In some embodiments of this application, for an elliptical picture grid, a horizontal-to-vertical ratio of a circumscribed rectangle of the elliptical picture grid is a ratio of a minor axis of an ellipse to a major axis of the ellipse. For a circular picture grid, a horizontal-to-vertical ratio of a circumscribed rectangle of the circular picture grid is a ratio between diameters of a circle. A circumscribed rectangle of a non-rectangular picture grid refers to a boundary determined based on a maximum horizontal coordinate, a minimum horizontal coordinate, a maximum vertical coordinate, and a minimum vertical coordinate of the non-rectangular picture grid in two-dimensional coordinates of the non-rectangular picture grid in a two-dimensional shape. For example, the picture grid is in a shape of a non-rectangle shown in FIG. 4(c). FIG. 4(c) is a schematic graphical diagram of a circumscribed rectangle of a picture grid according to an embodiment of this application. A black border shown in FIG. 4(c) is a circumscribed rectangle of the non-rectangle shown in FIG. 4(c). The circumscribed rectangle of the non-rectangle is a rectangle including a boundary formed by connecting a maximum horizontal coordinate, a minimum horizontal coordinate, a maximum vertical coordinate, and a minimum vertical coordinate of the non-rectangle in two-dimensional coordinates.

It should be noted that size ratios of pictures should be consistent with size ratios of the picture grids during sorting. If the size ratios of the pictures are horizontal-to-vertical ratios, the size ratios of the picture grids should also be horizontal-to-vertical ratios during sorting, to ensure accuracy of matching between the pictures and the corresponding picture grids. When the pictures are sorted in descending order of the size ratios of the pictures, the picture grids should also be sorted in descending order of the size ratios of the picture grids.

S44. Determine whether the N pictures include target pictures whose horizontal-to-vertical ratios are the same; and if the N pictures include the target pictures whose horizontal-to-vertical ratios are the same, proceed to S45; or if the N pictures do not include the target pictures whose horizontal-to-vertical ratios are the same, proceed to S46.

S45. If there are two pictures whose sequence numbers are 5, use the two pictures whose sequence numbers are 5 as target pictures, and determine the order of selecting the two target pictures in the step of selecting the N pictures.

S47. For the two target pictures with the sequence number 5, according to the order of selecting the two target pictures, assign one of the two target pictures which is selected earlier to the picture grid with the order number 5.

It can be understood that a picture grid whose sequence number is 6 is allocated for the other target picture, and picture grids are sequentially allocated for the remaining pictures subsequently based on sequence numbers that are of the pictures and that are obtained through sorting in descending order and sequence numbers that are of the picture grids and that are obtained through sorting in descending order.

S46. Correspondingly place, based on sequence numbers that are of the N pictures and that are obtained through sorting in descending order of the horizontal-to-vertical ratios, all the pictures in the N picture grids whose sequence numbers obtained through sorting in descending order are the same as those of the pictures.

In some embodiments of this application, a horizontal-to-vertical ratio of the picture grid may be 1:2, 4:7, 2:3, 8:9, 1:1, 4:3, or the like.

S48. For each template in the first template set, calculate, according to a predetermined formula, a cropping amount obtained after the N pictures are correspondingly placed in the picture grids of the template.

In some embodiments of this application, during calculation of the cropping amount corresponding to each template, to avoid a decrease in a speed of calculating a cropping amount caused due to an excessively large volume of area difference data in a manner in which the cropping amount is calculated by using an area difference between each picture grid of one template and a picture corresponding to the picture grid, the cropping amount corresponding to the template may be calculated in a normalization processing manner. To be specific, cropping amounts of pictures correspondingly placed in picture grids are represented in a percentage form, and values of the cropping amounts of the pictures correspondingly placed in the picture grids are all normalized to a range (0, 1). The cropping amount corresponding to the template is calculated according to the following calculation formulas:

$$C_k = \sum_{i=1}^{n} C_{ki}$$

$$C_{ki} = \begin{cases} 1 - \dfrac{r_i}{r_{ki}} & (r_{ki} > r_i) \\ 1 - \dfrac{r_i}{r_{ki}} & (r_i > r_{ki}) \end{cases}$$

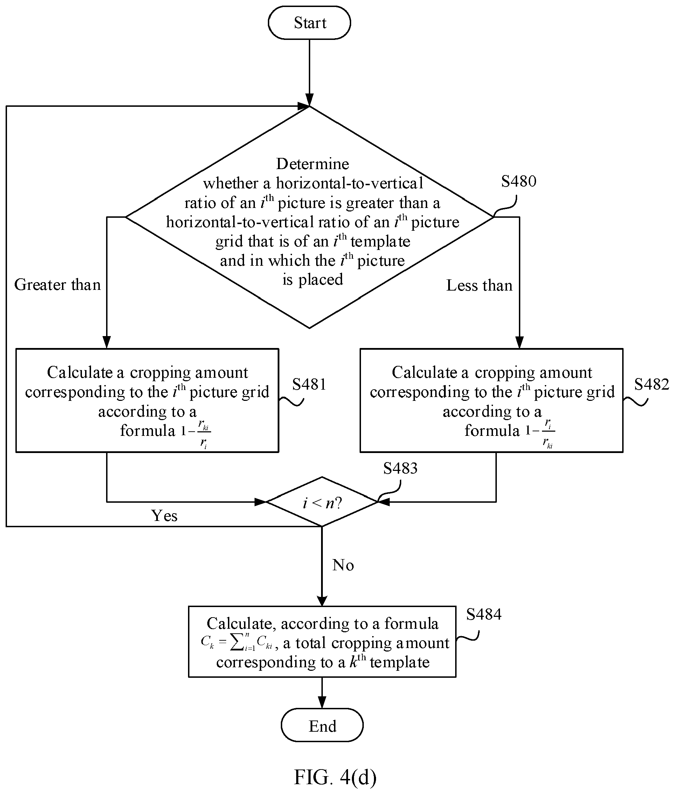

In some embodiments of this application, using an example in which a size ratio is a horizontal-to-vertical ratio and a predetermined sorting sequence is a descending order, if $n$ pictures are selected, a first template set including collage templates whose quantities of picture grids are the same as the quantity $n$ of pictures is $\{T_1, T_2, \ldots, T_k\}$, and a picture set $\{r_1, r_2, \ldots, r_n\}$ is formed by sorting the selected $n$ pictures in descending order of values of horizontal-to-vertical ratios of the pictures. Correspondingly, for the template $T_k$ in the first template set, a picture grid set $\{r_{k1}, r_{k2}, \ldots, r_{ki}\}$ is formed by sorting all picture grids of the template $T_k$ in descending order of values of horizontal-to-vertical ratios. To be specific, $r_1$ is a picture whose horizontal-to-vertical ratio is largest in the $n$ pictures, $r_{k1}$ is a picture grid whose horizontal-to-vertical ratio is largest in the template $T_k$, and so on. For details about step S48 of calculating a cropping amount according to a predetermined formula, refer to FIG. 4(d). FIG. 4(d) is a schematic flowchart of a method for calculating a cropping amount corresponding to a template according to an embodiment of this application. The method includes the following steps.

S480. Determine whether a horizontal-to-vertical ratio of an $i^{th}$ picture is greater than a horizontal-to-vertical ratio of an $i^{th}$ picture grid that is of a $k^{th}$ template and in which the $i^{th}$ picture is placed. If the horizontal-to-vertical ratio of the $i^{th}$ picture is greater than the horizontal-to-vertical ratio of the $i^{th}$ picture grid that is of the $k^{th}$ template and in which the $i^{th}$ picture is placed, proceed to S481; or if the horizontal-to-vertical ratio of the $i^{th}$ picture is less than the horizontal-to-vertical ratio of the $i^{th}$ picture grid that is of the $k^{th}$ template and in which the $i^{th}$ picture is placed, proceed to S482.

S481. Calculate a cropping amount corresponding to the $i^{th}$ picture grid according to a formula

$$1 - \frac{r_{ki}}{r_i}.$$

S482. Calculate a cropping amount corresponding to the $i^{th}$ picture grid according to a formula

$$1 - \frac{r_i}{r_{ki}}.$$

S483. When a condition $i<n$ is not satisfied, perform loop operation until a cropping amount that is of an $n^{th}$ picture and that is corresponding to the $k^{th}$ template is calculated and proceed to S584.

S484. Calculate, according to a formula

$$C_k = \sum_{i=1}^{n} C_{ki}$$

, a total cropping amount corresponding to the $k^{th}$ template.

The foregoing process is circularly performed until total cropping amounts corresponding to $k$ templates in a first template set $\{T_1, T_2, ......, T_k\}$ are calculated. The total cropping amounts corresponding to the $k$ templates form a set $\{C_1, C_2, ......, C_k\}$, and a target template $\min\{C_1, C_2, ......, C_k\}$ corresponding to a minimum cropping amount is selected from $\{C_1, C_2......, C_k\}$.

S49. Select, from the first template set, a template corresponding to a minimum cropping amount as a target template used for the N pictures.

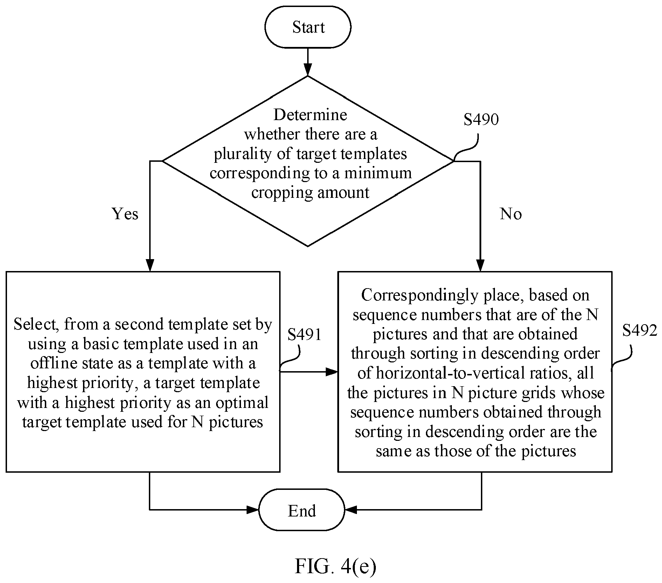

Further, in some embodiments of this application, there may be a plurality of target templates corresponding to the minimum cropping amount. In this case, a manner of selecting a target template as a final target template to complete picture stitching processing may be selecting an optimal target template from the plurality of target templates based on preset priorities. For details about step S49, refer to FIG. 4(e). FIG. 4(e) is a schematic flowchart of a method for selecting an optimal target template according to an embodiment of this application. The method includes the following steps.

S490. Determine whether there are a plurality of target templates corresponding to the minimum cropping amount; and if there are a plurality of target templates corresponding to the minimum cropping amount, proceed to S491; or if there are only one target template corresponding to the minimum cropping amount, proceed to S492.

S491. Form a second template set by using the target templates, select, from the second template set by using a basic template that can be used in an offline state as a template with a highest priority, a target template with a highest priority as an optimal target template used for the eight pictures, and proceed to S492.

In some embodiments of this application, the preset priorities may be set by using a basic template used in an offline state and a template that is used after being downloaded online. In addition, the preset priorities may be user-defined. To be specific, the user defines a selected target template as a target template with a relatively high priority according to a use requirement of the user. This improves user experience. Alternatively, a basic target template that can be used in an offline state may be set as a template with a higher priority, and a template that can be used only after being downloaded online may be set as a template with a priority lower than that of the basic target template.

S492. Correspondingly place, based on sequence numbers that are of the N pictures and that are obtained through sorting in descending order of horizontal-to-vertical ratios, all the pictures in N picture grids whose sequence numbers obtained through sorting in descending order are the same as those of the pictures.

S24 is performed after S23 is performed.

S24. For each template in the first template set, calculate a cropping amount corresponding to each template, where the cropping amount corresponding to the template is a sum of cropping amounts required for correspondingly placing, based on the sequence numbers that are of the N pictures and that are obtained through sorting in descending order of the horizontal-to-vertical ratios, all the pictures in the N picture grids whose sequence numbers obtained through sorting in descending order are the same as those of the pictures.

In some embodiments of this application, the cropping amount corresponding to each template refers to a sum of the picture area outside the picture grid when the 8 pictures in the template are located in the corresponding picture grid. The sum is obtained after the pictures are correspondingly placed, based on sorting sequence numbers that are of the pictures and that are obtained through sorting in descending order, in the picture grids whose sequence numbers obtained through sorting in descending order are the same as those of the pictures. During placing of a picture in a picture grid, to avoid over-cropping of a region in which information that is of the picture and that includes a biological feature is located, each picture may be cropped after a position of the picture in a picture grid corresponding to the picture is adjusted according to a biometric identification technology. It can be understood that, the cropping amount corresponding to each template may be calculated by using the calculation method shown in FIG. 4(d).

S25. Select, from the first template set, a template corresponding to a minimum cropping amount as a target template used for the N pictures.

In some embodiments of this application, after the target template is determined, the pictures are correspondingly placed, according to the predetermined sequence, in picture grids whose predetermined sequence numbers are the same as those of the pictures, to complete picture stitching processing on the pictures. According to the foregoing formulas, using three pictures as an example, a quantity of picture grids of each template in a first template set that is selected based on the three pictures is also 3. A horizontal-to-vertical ratio of a first picture is 3/4, a horizontal-to-vertical ratio of a second picture is 1/2, and a horizontal-to-vertical ratio of a third picture is 1/3. The three pictures are sorted in descending order of the horizontal-to-vertical ratios: the first picture, the second picture, and the third picture. A quantity of picture grids of a selected target template is correspondingly 3. A horizontal-to-vertical ratio of a first picture grid is 5/12, a horizontal-to-vertical ratio of a second picture grid is 5/6, and a horizontal-to-vertical ratio of a third picture grid is 7/12. The three picture grids of the target template are sorted in descending order of the horizontal-to-vertical ratios: the second picture grid, the third picture grid, and the first picture grid. According to a predetermined sorting sequence, the first picture whose sequence number is 1 is placed in the second picture grid whose sequence number is 1, the second picture whose sequence number is 2 is placed in the third picture grid whose sequence number is 2, and the third picture whose sequence number is 3 is placed in the third picture grid whose sequence number is 3. In this way, that a total cropping amount of the three pictures is minimum is ensured to the utmost.

In some embodiments of this application, according to the cropping amount calculation formulas, a total cropping amount of the three pictures used as an example is

$$\left(1 - \frac{9}{10}\right) + \left(1 - \frac{6}{7}\right) + \left(1 - \frac{4}{5}\right)$$

, that is, the total cropping amount of the three pictures is 44.3%. It should be noted that if a size ratio of a picture is the same as that of a picture grid, it indicates that the picture overlaps the picture grid or that the picture may be proportionally zoomed in or out to make the picture overlap the picture grid. In this case, the picture whose size ratio is the same as that of the picture grid can be placed in the picture grid without being cropped. In other words, a cropping amount is zero.

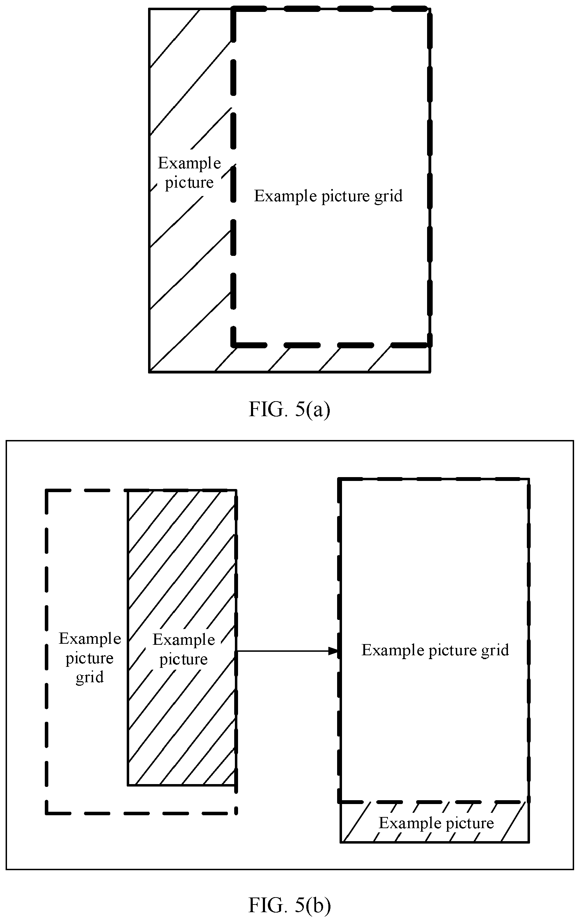

In some embodiments of this application, FIG. 5(a) is a schematic diagram of placing, in a picture grid of a target template, a picture whose predetermined sequence number is the same as that of the picture grid according to an embodiment of this application. A dashed-line box represents an example picture grid, a solid-line box represents an example picture, and a region that is of the picture and that is outside the dashed-line box is cropped. Matching the picture grid with the picture according to the technical solution in this application ensures that a rectangular shape of the original picture remains unchanged, thereby avoiding over-cropping of the picture.

In some embodiments of this application, when a size of a picture is less than a size of a picture grid (the picture is completely covered by the picture grid), FIG. 5(b) is a schematic diagram of position adjustment performed when a picture is placed in a picture grid according to an embodiment of this application. In a graphic example shown on a left side of FIG. 5(b), a size of the example picture is less than a size of the example picture grid. After the example picture is placed in the example picture grid, the size and a position of the example picture in the example picture grid are adjusted, so that three edge lines of the example picture overlap three edge lines of the example picture grid. After the size and the position of the example picture in the example picture grid are adjusted, a region that is of the picture and that is outside a region of the example picture grid may be cropped. It should be noted that FIG. 5(a) and FIG. 5(b) merely show examples, but this does not mean that only types shown in FIG. 5(a) and FIG. 5(b) can be used. This is not limited in this embodiment of this application.

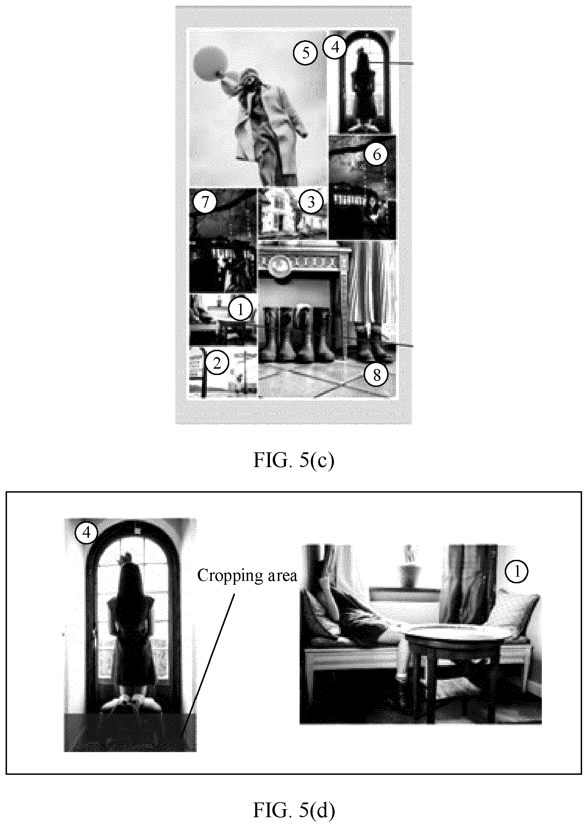

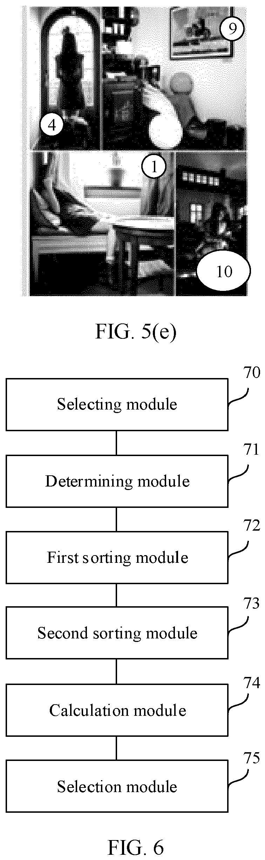

According to the foregoing picture processing method provided in the embodiments of this application, over-cropping of pictures is avoided during picture stitching. Refer to FIG. 5(c), FIG. 5(d), and FIG. 5(e). FIG. 5(c) is a schematic diagram of performing picture stitching by using a picture processing method according to an embodiment of this application. Eight pictures in FIG. 5(c) are corresponding to the eight pictures in FIG. 1(a). According to the picture processing method disclosed in this embodiment of this application, as shown in FIG. 5(d), a picture numbered 1 and a picture numbered 4 are not over-cropped, a cropping amount of the picture corresponding to the number 4 is less than 25%, and a cropping amount of the picture numbered 1 is zero. As shown in FIG. 5(e), four pictures in FIG. 5(e) are corresponding to the four pictures in FIG. 1(c). According to a technical solution of the foregoing picture processing method provided in the embodiments of this application, as shown in FIG. 5(e), when the four pictures are placed in a template having four picture grids, a picture numbered 1 and a picture numbered 4 are not over-cropped. In this way, important information of the picture numbered 1 and the picture numbered 4 is retained.

FIG. 6 is a schematic structural diagram of a picture processing apparatus according to an embodiment of this application. The picture processing apparatus includes

a selecting module 70, configured to select a predetermined quantity of pictures;
a determining module 71, configured to determine a first template set based on the predetermined quantity, where the first template set includes a plurality of templates used for the predetermined quantity of pictures, and each template includes the predetermined quantity of picture grids for accommodating the pictures;
a first sorting module 72, configured to sort the predetermined quantity of pictures based on a predetermined sequence of size ratios which is the ratio of sizes used for describing sizes of the pictures;
a second sorting module 73, configured to sort the predetermined quantity of picture grids for each template in the first template set based on a predetermined sequence of size ratios which is the ratio of sizes used for describing sizes of the picture grids;
a calculation module 74, configured to: for each template in the first template set, calculate a cropping amount corresponding to the template, where the cropping amount corresponding to the template is a sum of cropping amounts required for correspondingly placing, according to the predetermined sequence, all the pictures in the picture grids whose predetermined sequence numbers are the same as those of the pictures; and

a selection module 75, configured to select, from the first template set, a template corresponding to a minimum cropping amount as a target template used for the predetermined quantity of pictures.

In some embodiments of this application, the first sorting module 72 includes:

a first sorting unit, configured to sort the pictures according to a predetermined sequence of horizontal-to-vertical ratios of the pictures.

In some embodiments of this application, the second sorting module 73 includes:

a second sorting unit, configured to sort the picture grids according to a predetermined sequence of horizontal-to-vertical ratios of the picture grids.

In some embodiments of this application, the second sorting module 73 includes:

a third sorting unit, configured to sort the picture grids according to a predetermined sequence of horizontal-to-vertical ratios of circumscribed rectangles of the picture grids.

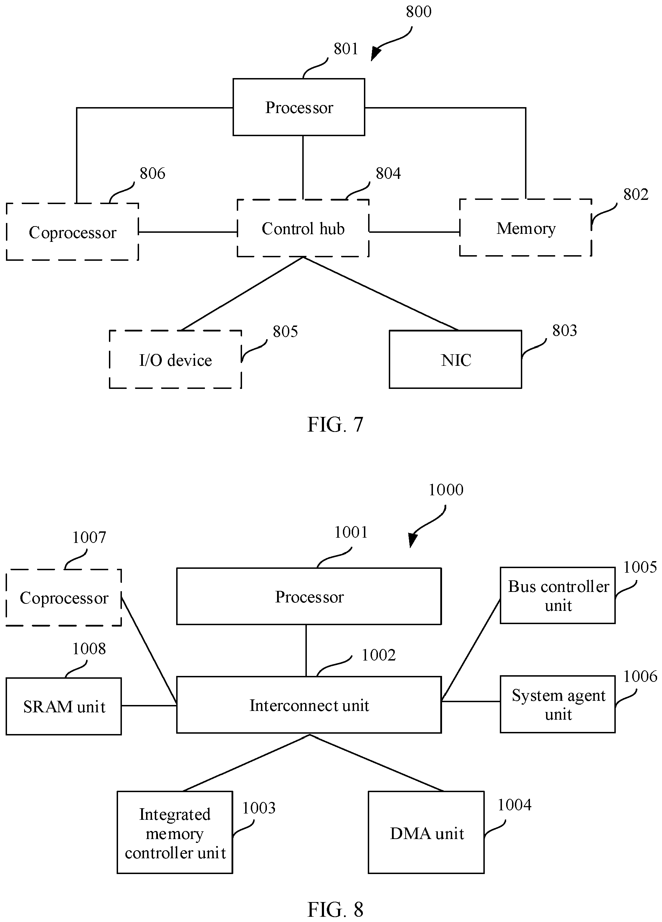

In some embodiments of this application, an electronic device is further provided. The following describes the electronic device in the embodiments of this application with reference to FIG. 7. FIG. 7 is a schematic structural diagram of an electronic device according to an embodiment of this application.

In at least one embodiment, a controller hub 804 communicates with a processor 801 through a multi-branch bus such as a front side bus (FSB), a point-to-point interface such as a quick path interconnect (QPI), or a similar connection. The processor 801 executes instructions for controlling general data processing operations. In an embodiment, the controller hub 804 includes but is not limited to a graphics & memory controller hub (GMCH) (not shown in the figure) and an input/output hub (IOH) (which may be on separate chips) (not shown in this figure). The GMCH includes a memory and a graphics controller, and is coupled to the IOH.

The electronic device 800 may further include a coprocessor 806 and a memory 802 that are coupled to the controller hub 804. Alternatively, at least one of the memory 802 and the GMCH may be integrated into the processor 801 (as described in this application), and the memory 802 and the coprocessor 806 are directly coupled to the processor 801 and the controller hub 804. The controller hub 804 and the IOH are located in a single chip.

In an embodiment, the memory 802 may be, for example, a dynamic random access memory (DRAM), a phase change memory (PCM), or a combination thereof. The memory 802 may include one or more tangible and non-transitory computer-readable media for storing data and/or instructions. The computer-readable storage medium stores instructions. Specifically, the computer-readable storage medium stores temporary and permanent copies of the instructions.

In an embodiment, the coprocessor 806 is a dedicated processor such as a high-throughput MIC processor, a network or communications processor, a compression engine, a graphics processor, a GPGPU, or an embedded processor. An optionality of the coprocessor 806 is shown by a dashed line in FIG. 7.

In an embodiment, the electronic device 800 may further include a network interface (NIC) 803. The network interface 803 may include a transceiver, configured to provide a radio interface for the device 800 to communicate with any other proper device (such as a front-end module or an antenna). In various embodiments, the network interface 803 may be integrated with another component of the electronic device 800. The network interface 803 can implement a function of the communications unit in the foregoing embodiment.

In an embodiment, as shown in FIG. 7, the electronic device 800 may further include an input/output (I/O) device 805. The input/output (I/O) device 805 may include: a user interface, where this design enables a user to interact with the electronic device 800; a peripheral component interface, where this design enables the peripheral component can also interact with the electronic device 800; and/or a sensor, where this design is configured to determine an environmental condition and/or position information related to electronic device 800.

It should be noted that FIG. 7 is merely used as an example. To be specific, although FIG. 7 shows that the electronic device 800 includes a plurality of components such as the processor 801, the controller hub 804, and the memory 802, in actual application, a device using the methods in this application may include only some of the components of the electronic device 800. For example, the device includes only the processor 801 and the NIC 803. A property of an optional component in FIG. 7 is shown by a dashed line.

In some embodiments of this application, the instructions stored in the computer-readable storage medium of the electronic device 800 may include instructions that enable, when being executed by at least one unit of the processor, the device to implement the picture processing methods described in FIG. 2 to FIG. 6. When the instructions are run on a computer, the computer is enabled to perform the picture processing methods described in FIG. 2 to FIG. 6.

FIG. 8 is a schematic structural diagram of an SOC according to an embodiment of this application, and is a block diagram of an SoC (System on Chip, system on chip) 1000 according to an embodiment of this application. In FIG. 8, similar components have same reference numerals. In addition, a dashed-line box represents an optional feature of a more advanced SoC. The SoC may be applied to an electronic device according to an embodiment of this application, and can implement corresponding functions according to instructions stored in the SoC.

In FIG. 8, the SoC 1000 includes an interconnect unit 1002 coupled to a processor 1001; a system agent unit 1006; a bus controller unit 1005; an integrated memory controller unit 1003; one group of or one or more coprocessors 1007 that may include integrated graphics logic, an image processor, an audio processor, and a video processor; a static random access memory (SRAM) unit 1008; and a direct memory access (DMA) unit 1004. In an embodiment, the coprocessor 1007 includes a dedicated processor such as a network or communications processor, a compression engine, a GPU, a high-throughput MIC processor, or an embedded processor.

The static random access memory (SRAM) unit 1008 may include one or more computer-readable media for storing data and/or instructions. The computer-readable storage medium may store instructions. Specifically, the computer-readable storage medium stores temporary and permanent copies of the instructions.

When the SoC 1000 is applied to the electronic device according to this application, the instructions stored in the computer-readable storage medium may include instructions that enable, when being executed by at least one unit of the processor, the electronic device to implement the picture processing methods described in FIG. 2 to FIG. 6. When the instructions are run on a computer, the computer is enabled to perform the picture processing methods described in FIG. 2 to FIG. 6.

In addition, an embodiment of this application further discloses a computer-readable storage medium. The computer-readable storage medium stores a processing program. When the processing program is executed by a processor, the image processing methods described in FIG. 2 to FIG. 6 are implemented.

The computer-readable storage medium may be a read-only memory, a random access memory, a hard disk, an optical disc, or the like.

The picture processing method and apparatus, the electronic device, and the storage medium that are disclosed in the embodiments of this application have the following beneficial effects.

After selecting the predetermined quantity of pictures, a user correspondingly selects, based on the predetermined quantity of pictures, the templates whose quantities of picture grids for accommodating pictures are the same as the predetermined quantity, where the templates form the first template set. After the first template set is selected, a specific template that is selected as the target template may be determined based on the total cropping amount obtained after the pictures are correspondingly placed in the picture grids of each template. Specifically, the pictures are sorted according to the predetermined sequence of the size ratios for describing the sizes of the pictures; the picture grids of each template are sorted according to the same predetermined sequence based on the size ratios for describing the sizes of the picture grids; the pictures are placed, according to the same predetermined sequence, in the picture grids corresponding to each template; a total cropping amount of the pictures placed in the picture grids of the template is calculated, where each template is corresponding to one total cropping amount; and the template corresponding to the minimum cropping amount is used as the target template. In this way, during picture stitching performed on the pictures, the template corresponding to the minimum cropping amount is selected as a collage template, and picture grids in which the pictures are placed are correspondingly sorted based on the size ratios of the pictures. This avoids a great loss of information of the pictures caused because the pictures are over-cropped.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

## Claims

1. A computer implemented picture processing method, wherein the picture processing method comprises:

   selecting a predetermined quantity of pictures;
   determining a first template set based on the predetermined quantity, wherein the first template set comprises a plurality of templates used for the predetermined quantity of pictures, and each template comprises the predetermined quantity of picture grids for accommodating the pictures;
   sorting the predetermined quantity of pictures based on a predetermined sequence of size ratios which is the ratio of sizes used for describing sizes of the pictures;
   sorting the predetermined quantity of picture grids for each template in the first template set based on the predetermined sequence of size ratios which is the ratio of sizes used for describing sizes of the picture grids;
   for each template in the first template set, calculating a cropping amount corresponding to the template, wherein the cropping amount corresponding to the template is a sum of cropping amounts required for correspondingly placing, according to the predetermined sequence, all the sorted pictures in the sorted picture grids whose predetermined sequence numbers are the same as those of the pictures; and
   selecting, from the first template set, a template corresponding to a minimum cropping amount as a target template used for the predetermined quantity of pictures, to avoid over cropping.

2. The computer implemented picture processing method according to claim 1, wherein the sorting the predetermined quantity of pictures based on a predetermined sequence of size ratios for describing sizes of the pictures comprises:
sorting the pictures according to a predetermined sequence of horizontal-to-vertical ratios of the pictures.

3. The computer implemented picture processing method according to claim 2, wherein if the picture grids are rectangular, the sorting the predetermined quantity of picture grids based on the predetermined sequence of size ratios for describing sizes of the picture grids comprises:
sorting the picture grids according to a predetermined sequence of horizontal-to-vertical ratios of the picture grids.

4. The computer implemented picture processing method according to claim 2, wherein if the picture grids are non-rectangular, the sorting the predetermined quantity of picture grids based on the predetermined sequence of size ratios for describing sizes of the picture grids comprises:
sorting the pictures grids according to a predetermined sequence of horizontal-to-vertical ratios of circumscribed rectangles of the picture grids.

5. The computer implemented picture processing method according to claim 1, wherein the predetermined sequence is a descending order.

6. The computer implemented picture processing method according to any one of claims 1 to 5, wherein

the horizontal-to-vertical ratio of the picture comprises a ratio of a width of the picture to a height of the picture, and
the horizontal-to-vertical ratio of the picture grid comprises a ratio of a width of the picture grid to a height of the picture grid, and the width and the height are in units of centimeters.

7. The computer implemented picture processing method according to any one of claims 1 to 5, wherein if the pictures comprise target pictures whose size ratios of sizes used for describing sizes of the pictures are the same, the order of selecting the target pictures in the step of selecting a predetermined quantity of pictures are used as priorities to preferably allocate, to a target picture that is selected earlier in the target pictures, a picture grid consistent with a predetermined sequence number of the target picture.

8. The computer implemented picture processing method according to any one of claims 1 to 5, wherein if there are a plurality of target templates corresponding to the minimum cropping amount, a second template set is formed by using the target templates, and a target template with a highest priority is selected, according to preset priorities, from the second template set as an optimal target template used for the predetermined quantity of pictures.

9. The computer implemented picture processing method according to any one of claims 1 to 5, wherein the cropping amount corresponding to the template is calculated according to the following formulas:

$$C_k = \sum_{i=1}^{n} C_{ki}$$

$$C_{ki} = \begin{cases} 1 - \dfrac{r_i}{r_{ki}} & (r_{ki} > r_i) \\ 1 - \dfrac{r_{ki}}{r_i} & (r_i > r_{ki}) \end{cases}$$

wherein $C_k$ is a total cropping amount corresponding to a $k$th template, $C_{ki}$ is a cropping amount of an $i$th picture placed in an $i$th picture grid of the $k$th template, $r_i$ is a size ratio for describing a size of the $i$th picture, and $r_{ki}$, is a size ratio for describing the $i$th picture grid that is of the $k$th template and in which the $i$th picture is placed.

10. The computer implemented picture processing method according to any one of claims 1 to 5, wherein after the target template is determined, the pictures are correspondingly placed, according to the predetermined sequence, in picture grids whose predetermined sequence numbers are the same as those of the pictures, to complete picture stitching processing on the pictures.

11. A picture processing apparatus, comprising:

a selecting module (70), configured to select a predetermined quantity of pictures;
a determining module (71), configured to determine a first template set based on the predetermined quantity, wherein the first template set comprises a plurality of templates used for the predetermined quantity of pictures, and each template comprises the predetermined quantity of picture grids for accommodating the pictures;
a first sorting module (72), configured to sort the predetermined quantity of pictures based on a predetermined sequence of size ratios which is the ratio of sizes used for describing sizes of the pictures;
a second sorting module (73), configured to sort the predetermined quantity of picture grids for each template in the first template set based on the predetermined sequence of size ratios which is the ratio of sizes used for describing sizes of the picture grids;
a calculation module (74), configured to: for each template in the first template set, calculate a cropping amount corresponding to the template, wherein the cropping amount corresponding to the template is a sum of cropping amounts required for correspondingly placing, according to the predetermined sequence, all the sorted pictures in the sorted picture grids whose predetermined sequence numbers are the same as those of the pictures; and
a selection module (75), configured to select, from the first template set, a template corresponding to a minimum cropping amount as a target template used for the predetermined quantity of pictures, to avoid over cropping.

12. The picture processing apparatus according to claim 11, wherein the first sorting module (72) comprises: a first sorting unit, configured to sort the pictures according to a predetermined sequence of horizontal-to-vertical ratios of the pictures.

13. The picture processing apparatus according to claim 11, wherein the second sorting (73) module comprises:
a second sorting unit, configured to sort the picture grids according to a predetermined sequence of horizontal-to-vertical ratios of the picture grids.

14. A computer-readable storage medium, wherein the computer-readable storage medium stores a processing program, and when the processing program is executed by a processor, the steps of the image processing method according to any one of claims 1 to 10 are implemented.

**Patentansprüche**

1. Computerimplementiertes Bildverarbeitungsverfahren, wobei das Bildverarbeitungsverfahren umfasst:

Auswählen einer vorbestimmten Anzahl von Bildern;
Bestimmen eines ersten Vorlagensatzes basierend auf der vorbestimmten Anzahl, wobei der erste Vorlagensatz eine Vielzahl von Vorlagen umfasst, die für die vorbestimmte Anzahl von Bildern verwendet werden, und jede Vorlage die vorbestimmte Anzahl von Bildrastern zum Aufnehmen der Bilder umfasst;
Sortieren der vorbestimmten Anzahl von Bildern basierend auf einer vorbestimmten Sequenz von Größenverhältnissen, die das Verhältnis von Größen ist, das zum Beschreiben von Größen der Bilder verwendet wird;
Sortieren der vorbestimmten Anzahl von Bildrastern für jede Vorlage in dem ersten Vorlagensatz basierend auf der vorbestimmten Sequenz von Größenverhältnissen, die das Verhältnis von Größen ist, das zum Beschreiben von Größen der Bildraster verwendet wird;
für jede Vorlage in dem ersten Vorlagensatz, Berechnen eines Umfangs eines Zuschneidens, der der Vorlage entspricht, wobei der Umfang des Zuschneidens, der der Vorlage entspricht, eine Summe von Umfängen des Zuschneidens ist, die zum entsprechenden Platzieren gemäß der vorbestimmten Sequenz sämtlicher der sortierten Bilder in den sortierten Bildrastern erforderlich ist, deren vorbestimmte Sequenznummern die gleichen wie die der Bilder sind; und
Auswählen, aus dem ersten Vorlagensatz, einer Vorlage, die einem minimalen Umfang des Zuschneidens als eine Zielvorlage entspricht, die für die vorbestimmte Anzahl von Bildern verwendet wird, um übermäßiges Zuschneiden zu vermeiden.

2. Computerimplementiertes Bildverarbeitungsverfahren nach Anspruch 1, wobei das Sortieren der vorbestimmten Anzahl von Bildern basierend auf einer vorbestimmten Sequenz von Größenverhältnissen zum Beschreiben von Größen der Bilder umfasst:
Sortieren der Bilder gemäß einer vorbestimmten Sequenz von Horizontal-zu-vertikal-Verhältnissen der Bilder.

3. Computerimplementiertes Bildverarbeitungsverfahren nach Anspruch 2, wobei, falls die Bildraster rechteckig sind, das Sortieren der vorbestimmten Anzahl von Bildrastern basierend auf der vorbestimmten Sequenz von Größenverhältnissen zum Beschreiben von Größen der Bildraster umfasst:
Sortieren der Bildraster gemäß einer vorbestimmten Sequenz von Horizontal-zu-vertikal-Verhältnissen der Bildraster.

4. Computerimplementiertes Bildverarbeitungsverfahren nach Anspruch 2, wobei, falls die Bildraster nicht rechteckig sind, das Sortieren der vorbestimmten Anzahl von Bildrastern basierend auf der vorbestimmten Sequenz von Größenverhältnissen zum Beschreiben von Größen der Bildraster umfasst:
Sortieren der Bildraster gemäß einer vorbestimmten Sequenz von Horizontal-zu-vertikal-Verhältnissen von umbeschriebenen Rechtecken der Bildraster.

5. Computerimplementiertes Bildverarbeitungsverfahren nach Anspruch 1, wobei die vorbestimmte Sequenz eine absteigende Reihenfolge besitzt.

6. Computerimplementiertes Bildverarbeitungsverfahren nach einem der Ansprüche 1 bis 5, wobei

das Horizontal-zu-vertikal-Verhältnis des Bilds ein Verhältnis einer Breite des Bilds zu einer Höhe des Bilds umfasst, und
das Horizontal-zu-vertikal-Verhältnis des Bildrasters ein Verhältnis einer Breite des Bildrasters zu einer Höhe des Bildrasters umfasst und die Breite und die Höhe in Einheiten von Zentimetern sind.

7. Computerimplementiertes Bildverarbeitungsverfahren nach einem der Ansprüche 1 bis 5, wobei, falls die Bilder Zielbilder umfassen, deren Größenverhältnisse von Größen, die zum Beschreiben von Größen der Bilder verwendet werden, gleich sind, die Reihenfolge des Auswählens der Zielbilder in dem Schritt des Auswählens einer vorbestimmten Anzahl von Bildern als Prioritäten verwendet wird, um vorzugsweise einem Zielbild, das zuvor in den Zielbildern ausgewählt wird, ein Bildraster, das mit einer vorbestimmten Sequenznummer des Zielbilds ausgewählt wird, zuzuweisen.

8. Computerimplementiertes Bildverarbeitungsverfahren nach einem der Ansprüche 1 bis 5, wobei, falls es eine Vielzahl von Zielvorlagen gibt, die dem minimalen Umfang des Zuschneidens entsprechen, ein zweiter Vorlagensatz durch Verwenden der Zielvorlagen ausgebildet wird, und eine Zielvorlage mit einer höchsten Priorität gemäß den voreingestellten Prioritäten aus dem zweiten Vorlagensatz als eine optimale Zielvorlage, die für die vorbestimmte Anzahl von Bildern verwendet wird, ausgewählt wird.

9. Computerimplementiertes Bildverarbeitungsverfahren nach einem der Ansprüche 1 bis 5, wobei der Umfang des Zuschneidens, der der Vorlage entspricht, gemäß den folgenden Formeln berechnet wird:

$$C_k = \sum_{i=1}^{n} C_{ki}$$

$$C_{ki} = \begin{cases} 1 - \dfrac{r_i}{r_{ki}} & (r_{ki} > r_i) \\[2mm] 1 - \dfrac{r_{ki}}{r_i} & (r_i > r_{ki}) \end{cases}$$

wobei $C_k$ ein Gesamtumfang des Zuschneidens ist, der einer $k^{ten}$ Vorlage entspricht, $C_{ki}$ ein Umfang des Zuschneidens eines $i^{ten}$ Bilds ist, das in einem $i^{ten}$ Bildraster der $k^{ten}$ Vorlage platziert wird, $r_i$ ein Größenverhältnis zum Beschreiben einer Größe des $i^{ten}$ Bilds ist und $r_{ki}$ ein Größenverhältnis zum Beschreiben des $i^{ten}$ Bildrasters ist, das zu der $k^{ten}$ Vorlage gehört und in dem das $i^{te}$ Bild platziert wird.

10. Computerimplementiertes Bildverarbeitungsverfahren nach einem der Ansprüche 1 bis 5, wobei nach dem Bestimmen der Zielvorlage die Bilder entsprechend der vorbestimmten Sequenz in Bildraster platziert werden, deren vorbestimmte Sequenznummern die gleichen wie die der Bilder sind, um eine Verarbeitung zum Zusammenfügen der Bilder an den Bildern abzuschließen.

11. Bildverarbeitungseinrichtung, umfassend:

ein Auswahlmodul (70), das konfiguriert ist, um eine vorbestimmte Anzahl von Bildern auszuwählen;
ein Bestimmungsmodul (71), das konfiguriert ist, um einen ersten Vorlagensatz basierend auf der vorbestimmten Anzahl zu bestimmen, wobei der erste Vorlagensatz eine Vielzahl von Vorlagen umfasst, die für die vorbestimmte Anzahl von Bildern verwendet werden, und jede Vorlage die vorbestimmte Anzahl von Bildrastern zum Aufnehmen der Bilder umfasst;
ein erstes Sortiermodul (72), das konfiguriert ist, um die vorbestimmte Anzahl von Bildern basierend auf einer vorbestimmten Sequenz von Größenverhältnissen, die das Verhältnis von Größen ist, das zum Beschreiben von Größen der Bilder verwendet wird, zu sortieren;
ein zweites Sortiermodul (73), das konfiguriert ist, um die vorbestimmte Anzahl von Bildrastern für jede Vorlage in dem ersten Vorlagensatz basierend auf der vorbestimmten Sequenz von Größenverhältnissen, die das Verhältnis von Größen ist, das zum Beschreiben von Größen der Bildraster verwendet wird, zu sortieren;
ein Berechnungsmodul (74), das konfiguriert ist zum: für jede Vorlage in dem ersten Vorlagensatz, Berechnen eines Umfangs eines Zuschneidens, der der Vorlage entspricht, wobei der Umfang des Zuschneidens, der der Vorlage entspricht, eine Summe von Umfängen des Zuschneidens ist, die zum entsprechenden Platzieren gemäß der vorbestimmten Sequenz sämtlicher der sortierten Bilder in den sortierten Bildrastern erforderlich ist, deren vorbestimmte Sequenznummern die gleichen wie die der Bilder sind; und
ein Auswahlmodul (75), das konfiguriert ist, um aus dem ersten Vorlagensatz eine Vorlage, die einem minimalen Umfang des Zuschneidens als eine Zielvorlage entspricht, die für die vorbestimmte Anzahl von Bildern verwendet wird, um übermäßiges Zuschneiden zu vermeiden, auszuwählen.

**12.** Bildverarbeitungseinrichtung nach Anspruch 11, wobei das erste Sortiermodul (72) umfasst:
eine erste Sortiereinheit, die konfiguriert ist, um die Bilder gemäß einer vorbestimmten Sequenz von Horizontal-zu-vertikal-Verhältnissen der Bilder zu sortieren.

**13.** Bildverarbeitungseinrichtung nach Anspruch 11, wobei das zweite Sortiermodul (73) umfasst:
eine zweite Sortiereinheit, die konfiguriert ist, um die Bildraster gemäß einer vorbestimmten Sequenz von Horizontal-zu-vertikal-Verhältnissen der Bildraster zu sortieren.

**14.** Computerlesbares Speichermedium, wobei das computerlesbare Speichermedium ein Verarbeitungsprogramm speichert, und wenn das Computerprogramm durch einen Prozessor ausgeführt wird, die Schritte des Bildverarbeitungsverfahrens nach einem der Ansprüche 1 bis 10 implementiert werden.

**Revendications**

**1.** Procédé de traitement d'images implémenté par ordinateur, le procédé de traitement d'images comprenant :

la sélection d'une quantité prédéterminée d'images ;
la détermination d'un premier ensemble de modèles en fonction de la quantité prédéterminée, le premier ensemble de modèles comprenant une pluralité de modèles utilisés pour la quantité prédéterminée d'images, et chaque modèle comprenant la quantité prédéterminée de grilles d'images destinées à accueillir les images ;
le tri de la quantité prédéterminée d'images en fonction d'une séquence prédéterminée de rapports de taille qui est le rapport des tailles utilisées pour décrire les tailles des images ;
le tri de la quantité prédéterminée de grilles d'images pour chaque modèle dans le premier ensemble de modèles en fonction de la séquence prédéterminée de rapports de taille qui est le rapport des tailles utilisées pour décrire les tailles des grilles d'images ;
pour chaque modèle dans le premier ensemble de modèles, le calcul d'une quantité de rognage correspondant au modèle, la quantité de rognage correspondant au modèle étant une somme des quantités de rognage requises pour placer de manière correspondante, selon la séquence prédéterminée, toutes les images triées dans les grilles d'images triées dont les numéros de séquence prédéterminée sont les mêmes que ceux des images ; et
la sélection, parmi le premier ensemble de modèles, d'un modèle correspondant à une quantité minimale de rognage en guise de modèle cible utilisé pour la quantité prédéterminée d'images, pour éviter un rognage excessif.

**2.** Procédé de traitement d'images implémenté par ordinateur selon la revendication 1, dans lequel le tri de la quantité prédéterminée d'images en fonction d'une séquence prédéterminée de rapports de taille pour décrire les tailles des images comprend :
le tri des images selon une séquence prédéterminée de rapports entre l'horizontale et la verticale des images.

**3.** Procédé de traitement d'images implémenté par ordinateur selon la revendication 2, dans lequel si les grilles d'images sont rectangulaires, le tri de la quantité prédéterminée de grilles d'images en fonction de la séquence prédéterminée de rapports de taille pour décrire les tailles des grilles d'images comprend :
le tri des grilles d'images selon une séquence prédéterminée de rapports entre l'horizontale et la verticale des grilles d'images.

**4.** Procédé de traitement d'images implémenté par ordinateur selon la revendication 2, dans lequel si les grilles d'images sont non rectangulaires, le tri de la quantité prédéterminée de grilles d'images en fonction de la séquence prédéterminée de rapports de taille pour décrire les tailles des grilles d'images comprend :
le tri des grilles d'images selon une séquence prédéterminée de rapports entre l'horizontale et la verticale de rectangles circonscrits des grilles d'images.

**5.** Procédé de traitement d'images implémenté par ordinateur selon la revendication 1, dans lequel la séquence prédéterminée est un ordre décroissant.

**6.** Procédé de traitement d'images implémenté par ordinateur selon l'une quelconque des revendications 1 à 5, dans lequel

le rapport entre l'horizontale et la verticale de l'image comprend un rapport d'une largeur de l'image à une hauteur de l'image, et
le rapport entre l'horizontale et la verticale de la grille d'images comprend un rapport d'une largeur de la grille d'images à une hauteur de la grille d'images, et la largeur et la hauteur sont dans des unités de centimètres.

7. Procédé de traitement d'images implémenté par ordinateur selon l'une quelconque des revendications 1 à 5, dans lequel si les images comprennent des images cibles dont les rapports de taille des tailles utilisées pour décrire les tailles des images sont les mêmes, l'ordre de sélection des images cibles dans l'étape de sélection d'une quantité prédéterminée d'images est utilisé en guise de priorités pour allouer de préférence, à une image cible qui est sélectionnée plus tôt dans les images cibles, une grille d'images cohérente avec un numéro de séquence prédéterminé de l'image cible.

8. Procédé de traitement d'images implémenté par ordinateur selon l'une quelconque des revendications 1 à 5, dans lequel s'il y a une pluralité de modèles cibles correspondant à la quantité minimale de rognage, un second ensemble de modèles est formé en utilisant les modèles cibles, et un modèle cible avec une priorité la plus élevée est sélectionné, selon des priorités prédéfinies, parmi le second ensemble de modèles en guise de modèle cible optimal utilisé pour la quantité prédéterminée d'images.

9. Procédé de traitement d'images implémenté par ordinateur selon l'une quelconque des revendications 1 à 5, dans lequel la quantité de rognage correspondant au modèle est calculée selon les formules suivantes :

$$C_k = \sum_{i=1}^{n} C_{ki}$$

$$C_{ki} = \begin{cases} 1 - \dfrac{r_i}{r_{ki}} & \left( r_{ki} > r_i \right) \\[2mm] 1 - \dfrac{r_{ki}}{r_i} & \left( r_i > r_{ki} \right) \end{cases}$$

dans lesquelles $C_k$ est une quantité totale de rognage correspondant à un $k^{ème}$ modèle, $C_{ki}$ est une quantité de rognage d'une $i^{ème}$ image placée dans une $i^{ème}$ grille d'images du $k^{ème}$ modèle, $r_i$ est un rapport de taille pour décrire la taille de la $i^{ème}$ image, et $r_{ki}$, est un rapport de taille pour décrire la $i^{ème}$ grille d'images qui est du $k^{ème}$ modèle et dans lequel la $i^{ème}$ image est placée.

10. Procédé de traitement d'images implémenté par ordinateur selon l'une quelconque des revendications 1 à 5, dans lequel après que modèle cible est déterminé, les images sont placées de manière correspondante, selon la séquence prédéterminée, dans des grilles d'images dont les numéros de séquence prédéterminée sont les mêmes que ceux des images, pour achever un traitement d'assemblage d'images sur les images.

11. Appareil de traitement d'images, comprenant :

un module de sélection (70), configuré pour sélectionner une quantité prédéterminée d'images ;
un module de détermination (71), configuré pour déterminer un premier ensemble de modèles en fonction de la quantité prédéterminée, le premier ensemble de modèles comprenant une pluralité de modèles utilisés pour la quantité prédéterminée d'images, et chaque modèle comprenant la quantité prédéterminée de grilles d'images destinées à accueillir les images ;
un premier module de tri (72), configuré pour trier la quantité prédéterminée d'images en fonction d'une séquence prédéterminée de rapports de taille qui est le rapport des tailles utilisées pour décrire les tailles des images ;
un second module de tri (73), configuré pour trier la quantité prédéterminée de grilles d'images pour chaque modèle dans le premier ensemble de modèles en fonction de la séquence prédéterminée de rapports de taille qui est le rapport des tailles utilisées pour décrire les tailles des grilles d'images ;
un module de calcul (74), configuré : pour chaque modèle dans le premier ensemble de modèles, pour calculer une quantité de rognage correspondant au modèle, la quantité de rognage correspondant au modèle étant une somme des quantités de rognage requises pour placer de manière correspondante, selon la séquence prédéterminée, toutes les images triées dans les grilles d'images triées dont les numéros de séquence prédéterminée sont les mêmes que ceux des images ; et
un module de sélection (75), configuré pour sélectionner, parmi le premier ensemble de modèles, un modèle correspondant à une quantité minimale de rognage en guise de modèle cible utilisé pour la quantité prédéterminée d'images, pour éviter un rognage excessif.

12. Appareil de traitement d'images selon la revendication 11, dans lequel le premier module de tri (72) comprend :
une première unité de tri, configurée pour trier les images selon une séquence prédéterminée de rapports entre l'horizontale et la verticale des images.

13. Appareil de traitement d'images selon la revendication 11, dans lequel le second module de tri (73) comprend :
une seconde unité de tri, configurée pour trier les grilles d'images selon une séquence prédéterminée de rapports entre l'horizontale et la verticale des grilles d'images.

14. Support de stockage lisible par ordinateur, le support de stockage lisible par ordinateur stockant un programme de traitement, et lorsque le traitement programme est exécuté par un processeur, les étapes du procédé de traitement d'images selon l'une quelconque des revendications 1 à 10 étant implémentées.

FIG. 1(a)

FIG. 1(b)

FIG. 1(c)

Start

Select N pictures — S20

Determine a first template set based on the selected N pictures — S21

Sort the N pictures in descending order of values of size ratios, wherein the size ratio is the ratio of sizes used for describe sizes of a picture — S22

For each template in the first template set, sort N picture grids in descending order of horizontal-to-vertical ratios for describing sizes of the picture grids — S23

For each template in the first template set, calculate a cropping amount corresponding to each template — S24

Select, from the first template set, a template corresponding to a minimum cropping amount as a target template used for the N pictures — S25

End

FIG. 2

FIG. 3(a)

FIG. 3(b)

```
                           ( Start )
                               │
                               ▼
        ┌─────────────────────────────────────────┐   S40
        │ Select N pictures, where a quantity of   │
        │ the pictures may be another value        │
        └─────────────────────────────────────────┘
                               │
                               ▼
        ┌─────────────────────────────────────────┐   S41
        │ Determine a first template set based on  │
        │ the selected N pictures                  │
        └─────────────────────────────────────────┘
                               │
                               ▼
        ┌─────────────────────────────────────────┐   S42
        │ Sort the N pictures in descending order  │
        │ of values of horizontal-to-vertical      │
        │ ratios for describing sizes of the       │
        │ pictures                                 │
        └─────────────────────────────────────────┘
                               │
                               ▼
        ┌─────────────────────────────────────────┐   S43
        │ For each template in the first template  │
        │ set, sort N picture grids in descending  │
        │ order of horizontal-to-vertical ratios   │
        │ for describing sizes of the picture grids│
        └─────────────────────────────────────────┘
                               │
                               ▼
                         ◇ Determine whether the N        S44
                           pictures include target
                           pictures whose horizontal-to-vertical
                           ratios are the same ◇
```

S45 — determine the order of selecting the two target pictures in the step of selecting the N pictures

S46 — Correspondingly place, based on sequence numbers that are of the N pictures and that are obtained through sorting in descending order of the horizontal-to-vertical ratios, all the pictures in the N picture grids whose sequence numbers obtained through sorting in descending order are the same as those of the pictures.

S47 — For the two target pictures with the sequence number 5, according to the order of selecting the two target pictures, assign one of the two target pictures which is selected earlier to the picture grid with the order number 5

S48 — For each template in the first template set, calculate, according to a predetermined formula, a cropping amount obtained after the N pictures are correspondingly placed in the picture grids of the template

S49 — Select, from the first template set, a template corresponding to a minimum cropping amount as a target template used for the N pictures

( End )

FIG. 4(a)

23

FIG. 4(b)

FIG. 4(c)

FIG. 4(d)

Start

Determine whether there are a plurality of target templates corresponding to a minimum cropping amount — S490

Yes

No

Select, from a second template set by using a basic template used in an offline state as a template with a highest priority, a target template with a highest priority as an optimal target template used for N pictures — S491

Correspondingly place, based on sequence numbers that are of the N pictures and that are obtained through sorting in descending order of horizontal-to-vertical ratios, all the pictures in N picture grids whose sequence numbers obtained through sorting in descending order are the same as those of the pictures — S492

End

FIG. 4(e)

FIG. 5(a)

FIG. 5(b)

FIG. 5(c)

FIG. 5(d)

FIG. 5(e)

FIG. 6

800

801

Processor

806

804

802

Coprocessor

Control hub

Memory

805

I/O device

803

NIC

FIG. 7

1000

1007

1001

1005

Coprocessor

Processor

Bus controller
unit

1008

1002

1006

SRAM unit

Interconnect unit

System agent
unit

Integrated
memory
controller unit

1003

DMA unit

1004

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2555165 A2
- US 2010329588 A1
- US 2010199227 A1